(19) Europäisches Patentamt / European Patent Office / Office européen des brevets

(11) **EP 2 740 012 B1**

(12) **FASCICULE DE BREVET EUROPEEN**

(45) Date de publication et mention de la délivrance du brevet:
**22.11.2017 Bulletin 2017/47**

(21) Numéro de dépôt: **12741354.0**

(22) Date de dépôt: **03.08.2012**

(51) Int Cl.:
*G05B 19/19* [(2006.01)]   *G05B 19/4062* [(2006.01)]
*B25J 9/16* [(2006.01)]   *B62D 57/032* [(2006.01)]
*G05B 13/04* [(2006.01)]

(86) Numéro de dépôt international:
**PCT/EP2012/065210**

(87) Numéro de publication internationale:
**WO 2013/017676 (07.02.2013 Gazette 2013/06)**

(54) **ROBOT A ARTICULATIONS DE RIGIDITE VARIABLE ET METHODE DE CALCUL DE LADITE RIGIDITE OPTIMISEE**

ROBOTER MIT GELENKEN MIT VARIABLER STEIFIGKEIT UND VERFAHREN ZUR BERECHNUNG DER OPTIMIERTEN STEIFIGKEIT

ROBOT WITH JOINTS OF VARIABLE RIGIDITY AND METHOD FOR CALCULATING SAID OPTIMISED RIGIDITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.08.2011 FR 1157171**

(43) Date de publication de la demande:
**11.06.2014 Bulletin 2014/24**

(73) Titulaire: **Softbank Robotics Europe
75015 Paris (FR)**

(72) Inventeurs:
• **GOUAILLIER, David
F-92120 Montrouge (FR)**
• **COLLETTE, Cyrille
F-92350 Le Plessis Robinson (FR)**

(74) Mandataire: **Nguyen Van Yen, Christian
Marks & Clerk France
Conseils en Propriété Industrielle
Immeuble Visium
22, Avenue Aristide Briand
94117 Arcueil Cedex (FR)**

(56) Documents cités:
**EP-A1- 1 486 298**   **EP-A1- 2 347 868**
**US-A- 5 719 479**   **US-A1- 2004 205 417**
**US-A1- 2008 258 670**

• **SENTIS L ET AL: "Prioritized multi-objective dynamics and control of robots in human environments", HUMANOID ROBOTS, 2004 4TH IEEE/RAS INTERNATIONAL CONFERENCE ON SANTA MONICA, CA, USA 10-12 NOV. 2004, PISCATAWAY, NJ, USA,IEEE, US, vol. 2, 10 novembre 2004 (2004-11-10), pages 764-780VOL.2, XP010807340, DOI: 10.1109/ICHR.2004.1442684 ISBN: 978-0-7803-8863-5**

**Description**

La présente invention appartient au domaine des robots articulés pouvant se déplacer sur une surface. Plus précisément, elle s'applique au contrôle de la rigidité des articulations dudit robot, celle-ci constituant à la fois un facteur important de l'ergonomie d'interaction avec le robot et un facteur limitant de la durée et de la fiabilité de son utilisation. Un exemple de robot articulé est un robot humanoïde, c'est-à-dire possédant certains attributs de l'apparence et des fonctionnalités de l'homme: une tête, un tronc, deux bras, deux mains, deux jambes, deux pieds...Au-delà de l'apparence, les fonctions qu'un robot humanoïde est capable de remplir vont dépendre de sa capacité à effectuer des mouvements, à parler et à « raisonner ». Des robots humanoïdes sont capables de marcher, de faire des gestes, avec les membres ou avec la tête. La complexité des gestes qu'ils sont capables d'effectuer augmente sans cesse. Des robots de ce type tel que NAO™, développé et commercialisé par la demanderesse, peuvent posséder des dizaines d'articulations dont les mouvements sont actionnés par des moteurs électriques. La logique de contrôle-commande desdits moteurs détermine à la fois la rigidité des articulations et la consommation électrique (et donc l'évolution de la température) du robot. Elle est ainsi un des éléments déterminants pour la sécurité du robot (impact sur la stabilité), la durée possible de son utilisation (arrêt obligatoire à partir d'une température limite) et l'expérience ressentie par un utilisateur dans son interaction avec le robot, une trop grande rigidité des chaînes articulaires écartant le robot d'un idéal type humanoïde. Une problématique de même type est également présente pour d'autres types de robots non humanoïdes, tels que des robots animaux ou plus généralement des robots comprenant des chaînes articulées.
La logique de contrôle-commande peut utiliser des consignes de position de l'articulation (généralement en angle), de vitesse de l'articulation (dérivée de l'angle) et/ou de couple. Ces logiques sont pilotées par des capteurs et peuvent ou pas comprendre des boucles de contreréaction permettant de guider la convergence vers la consigne. Le contrôle-commande utilisant une consigne de couple ou de courant est le plus coûteux et le moins répandu.

En effet, il est dans ce cas nécessaire d'utiliser un capteur précis de valeur de courant, ce qui sera coûteux, notamment dans le cas où le nombre d'articulations est très élevé.

Les robots à chaîne articulée peuvent avoir une base fixe, comme par exemple les bras articulés industriels, notamment pour réaliser des tâches de montage. Il s'agit alors d'objets dont le prix de revient unitaire peut atteindre quelques dizaines ou centaines de milliers d'euros et dont le nombre d'articulations reste faible. Dans ce cas, une logique de contrôle-commande par le couple peut être adaptée dans la mesure où le prix de revient unitaire n'est pas la considération principale.

Dans le cas des robots à chaîne articulée à base mobile, c'est-à-dire non fixée au sol, catégorie à laquelle appartiennent les robots humanoïdes, le nombre d'articulations étant plus élevé et la contrainte de prix de revient très importante, on utilise généralement une logique de contrôle-commande des articulations par la position et/ou la vitesse angulaire qui est beaucoup moins coûteuse pour un niveau donné de précision. Cependant cette logique de contrôle-commande a plusieurs inconvénients importants, notamment le fait que, si un obstacle vient empêcher le moteur d'atteindre la contrainte définie par une position cible, le moteur continuera à vouloir atteindre la position, inatteignable en réalité, et va donc pour ce faire consommer de l'électricité et élever la température de l'articulation et de l'ensemble jusqu'à provoquer la mise au repos du robot pour éviter sa détérioration. Ce problème est d'autant plus gênant qu'il suffit d'un simple défaut d'horizontalité des pieds du robot dans une station debout pour déclencher le phénomène de surchauffe.

Pour faire face à ce type de problèmes, il est connu de versions antérieures de NAO™ de définir un paramètre de rigidité pour chaque articulation qui permet de limiter le couple appliqué à celle-ci à un niveau sensiblement inférieur aux limites physiques définies par le constructeur, de manière à réduire les occurrences de mise en sécurité. Cependant, cette solution ne permet pas d'éviter la surconsommation d'énergie, notamment lorsque une des chaînes du robot rencontre un obstacle sur sa course. En effet, une limitation uniforme, nécessairement fixée à un niveau relativement élevé pour éviter des arrêts trop fréquents, ne va pas permettre une interruption précoce de la consommation des articulations en cause.

Il est également connu, notamment de la demande de brevet US2008/258670, de calculer une valeur de couple à appliquer à une articulation et de la convertir en consigne de vitesse angulaire. Cependant, il n'est pas tenu compte dans cette réalisation des forces de réaction aux points de contacts du robot avec son environnement, lesdites forces étant l'origine principale des applications de couples trop élevés qui génèrent des surchauffes.

EP2347868A1 montre un robot humanoïde calculant des compensations pour les positions des joints et pour le couple des joints afin de stabiliser sa marche. La présente invention résout ce problème en procurant des moyens pour faire varier le rigidité des articulations des chaînes du robot en fonction des forces appliquées audit robot aux points de contact avec son environnement.

A cet effet, l'invention divulgue un robot selon la revendication 1. Avantageusement, ledit offset varie selon la posture du robot.

Avantageusement, l'effet de l'accélération de la gravité est calculé à partir d'une matrice de coefficients d'inertie dépendant de la configuration du robot et appliquée aux angles articulaires et du vecteur gravité déterminé par combinaison de mesures d'une centrale inertielle du robot.

Avantageusement, pour le calcul du vecteur gravité on opère en outre une levée de doute par détermination de l'orientation dans l'espace d'une chaîne centrale du robot par résolution de la position d'effecteurs solidaires de ladite chaîne.

Avantageusement, les points d'application des forces de contact prises en compte dans le modèle d'équilibre dynamique du robot sont déterminés par génération d'une première liste d'effecteurs satisfaisant un critère choisi dans un groupe de critères comprenant une liste d'états on/off de capteurs de contact positionnés sur lesdits effecteurs, une liste de seuils de distance minimale par rapport au plan virtuel du sol desdits effecteurs et toute combinaison desdits listes, lesdits critères étant substantiellement déterminés par la morphologie du robot.

Avantageusement, les effecteurs de la première liste sont filtrés en une deuxième liste par comparaison de la posture actuelle du robot à des postures types stockées dans les données de configuration du robot, lesdites postures types déterminant une liste type d'effecteurs, ladite deuxième liste comprenant seulement les effecteurs de la liste correspondant à la posture type retenue comme la plus proche de la posture actuelle du robot selon un critère de similarité, si elle existe, et seulement ceux-ci.

Avantageusement, les forces de contact aux points d'application sont déterminées par recherche d'une solution sensiblement optimale à l'équation d'équilibre entre la somme desdites forces de contact et le poids du robot. et de la composante verticale des forces de perturbation.

Avantageusement, les forces de perturbation sont négligées.

L'invention divulgue également un procédé selon la revendication 10. L'invention divulgue enfin un programme d'ordinateur selon la revendication 12. La solution de l'invention permet de réduire de manière très significative la surconsommation d'énergie et la surchauffe. Dans les réalisations mises en oeuvre, on atteint presque une division par deux de l'élévation de température due à un fonctionnement des moteurs d'articulation à un couple trop élevé. Pour des articulations particulièrement sollicitées, telles que la cheville, la durée de fonctionnement avant mise en sécurité peut être multipliée par quatre.

La consommation d'énergie et la durée de vie totales du robot sont donc grandement améliorées.

En outre, les algorithmes utilisés sont par ailleurs peu gourmands en ressources de calcul (moins de 3% sur un processeur de type Geode™ de la société AMD (32 bits, 500 MHz).

Enfin, l'introduction d'un paramétrage de la rigidité des articulations, qui reste débrayable, permet de s'adapter aux préférences des utilisateurs et d'introduire des variantes selon les types de posture du robot, ce qui permet d'enrichir les expériences d'interaction des utilisateurs avec les robots.

L'invention sera mieux comprise et ses différentes caractéristiques et avantages ressortiront de la description qui suit de plusieurs exemples de réalisation et de ses figures annexées dont :

- La figure 1 illustre un robot symbolisé par des chaînes articulées ;
- La figure 2 illustre le principe général du contrôle-commande d'un moteur d'articulation d'un robot selon l'art antérieur ;
- La figure 3 illustre un organigramme général des traitements de contrôle-commande d'un moteur d'articulation d'un robot selon un mode de réalisation de l'invention;
- Les figures 4a et 4b représentent l'évolution au cours du temps des températures des articulations de la jambe droite d'un robot, respectivement selon l'art antérieur et selon un mode de réalisation de l'invention;
- Les figures 5a et 5b représentent l'évolution au cours du temps des températures des articulations de la jambe gauche d'un robot, respectivement selon l'art antérieur et selon un mode de réalisation de l'invention;
- La figure 6 est un organigramme de certaines étapes des traitements de contrôle-commande d'un moteur d'articulation d'un robot selon un mode de réalisation de l'invention ;
- La figure 7 est une première vue de détail d'une étape de l'organigramme de la figure 6 ;
- Les figures 8a à 8f représentent un robot dans trois postures, avec détermination des points de contact selon un mode de réalisation de l'invention ;
- La figure 9 est une deuxième vue de détail d'une étape de l'organigramme de la figure 6 ;
- La figure 10 est un schéma d'une architecture physique et fonctionnelle permettant la mise en oeuvre de l'invention dans plusieurs de ses modes de réalisation.

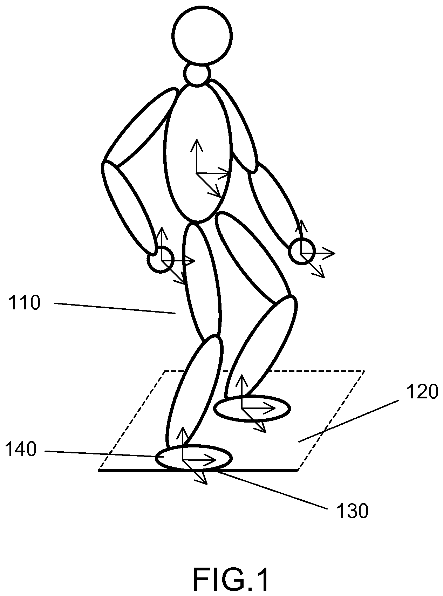

La figure 1 illustre un robot symbolisé par des chaînes articulées.

Le robot 100 de l'exemple illustré comporte cinq chaînes articulées, une chaîne 110 correspondant à la jambe droite, composée de plusieurs segments (cuisse, jambe, pied). Le robot est apte à se déplacer sur une surface 120. Il comprend au moins une articulation 140, dans cet exemple la cheville. Un robot tel que NAO™ déjà cité comporte 25 articulations, cet exemple de réalisation n'étant en aucune manière limitatif.

Le robot comportera en règle générale des capteurs de contact 130 du pied avec la surface 120. Ces capteurs peuvent par exemple être des FSR (Capteurs de pression au sol). Ces FSR sont particulièrement utiles à la mise en oeuvre de la présente invention. Ils sont destinés dans ce cadre à détecter le contact de chacun des pieds avec le sol ou toute autre surface de progression du robot. On peut utiliser dans ce but, par exemple, des capteurs de marque FlexiForce™ de la société Tekscan™ qui sont constitués par un ruban à au moins deux couches en matériau flexible piézo-résistif. La résistance électrique du ruban diminue en fonction de la force de pression verticale appliquée à la surface sur laquelle est disposé le ruban. La mesure du courant permet de déterminer la force de pression après calibration. Plusieurs capteurs, par exemple quatre, sont avantageusement prévus sur la sole de chaque pied.

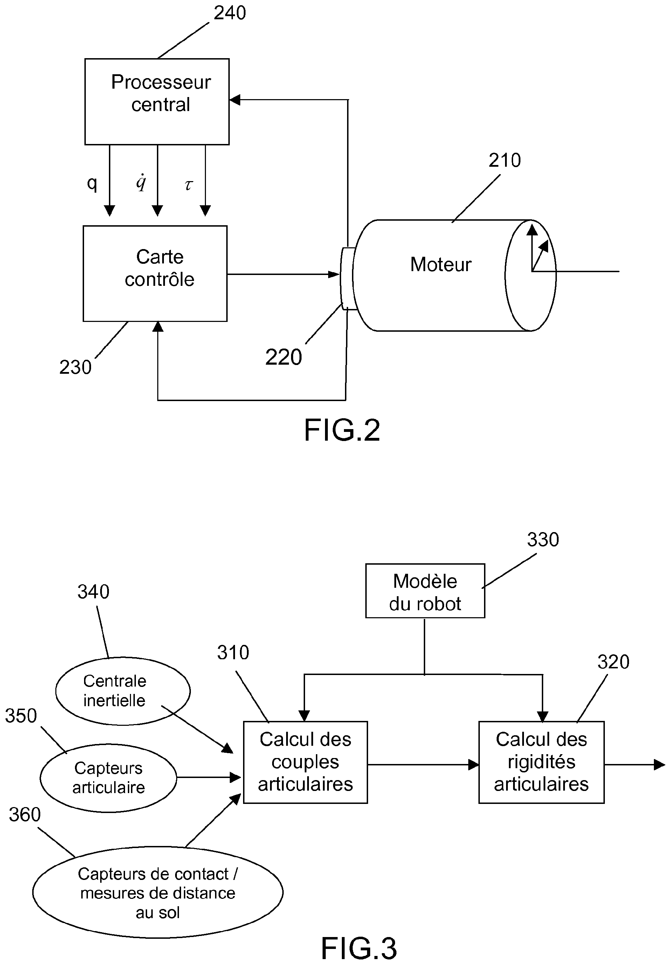

La figure 2 illustre le principe général du contrôle-commande d'un moteur d'articulation d'un robot selon l'art antérieur.

Un robot tel que NAO™ comprend environ deux douzaines de cartes électroniques de commande de capteurs et d'actionneurs qui pilotent les articulations. Une articulation a normalement au moins deux degrés de liberté et donc deux moteurs 210. Chaque moteur est piloté en angle par la variable de contrôle q. L'articulation comporte également plusieurs capteurs de position, 220, notamment des MRE (Magnetic Rotary Encoder). La carte électronique de contrôle 230 comporte un microcontrôleur du commerce. Ce peut être par exemple un DSPIC™ de la société Microchip. C'est un MCU 16 bits couplé à un DSP. Ce MCU a un cycle d'asservissement en boucle d'une ms.

La carte 240 exécute les fonctions de haut niveau qui permettent au robot d'accomplir les missions qui lui sont assignées. Le processeur de la carte peut être un processeur x86 du commerce. On choisira de manière privilégiée un processeur à basse consommation tel que le Geode™ de la société AMD (32 bits, 500 MHz). La carte comporte également un ensemble de mémoires RAM et flash. Cette carte gère également les communications du robot avec l'extérieur (serveur de comportements, autres robots...), normalement sur une couche de transmission WiFi, WiMax, éventuellement sur une réseau public de communications mobiles de données avec des protocoles standards éventuellement encapsulés dans un VPN. Le processeur est normalement piloté par un OS standard ce qui permet d'utiliser les langages de haut niveau usuels (C, C++, Python, ...) ou les langages spécifiques de l'intelligence artificielle comme URBI (langage de programmation spécialisé dans la robotique) pour la programmation des fonctions de haut niveau.

Traditionnellement un moteur électrique peut être commandé par une consigne donnée en angle ou position, q, en vitesse angulaire, $\dot{q}$, et/ou en couple, $\tau$, la commande en couple étant le plus souvent remplacée par une commande en courant. En effet, on a la relation canonique : $\tau = k_c I$, I étant l'intensité d'alimentation du moteur en courant électrique, $k_c$ étant une constante, au moins dans certaines plages de fonctionnement. Il est beaucoup plus facile de mesurer un courant que de mesurer un couple, les capteurs de couple étant très sensibles à des dérives. Cependant, même le pilotage en courant est peu répandu dans les robots ayant un grand nombre de moteurs. En effet, le pilotage en courant nécessite des cycles d'asservissement en boucle très rapide (de l'ordre de dix microsecondes) et un capteur de courant apte à déterminer le sens dudit courant, incompatibles avec des cartes électroniques de contrôle à bas coût.

Un inconvénient de cette approche est qu'une consigne en position qui ne peut s'exécuter en raison d'un obstacle non détecté va produire un couple appliqué au moteur très élevé, donc un courant élevé, d'où un échauffement très significatif et une surconsommation électrique, voire une rupture du moteur et/ou de l'articulation. Ces inconvénients réduisent de manière importante la durée de fonctionnement possible d'un robot.

Pour surmonter cet inconvénient, on peut introduire des mesures de limitation du couple appliqué à l'articulation. Ces mesures peuvent être mécaniques (par exemple des roues à engrenages débrayables) ou logiciels, en introduisant dans le circuit de commande du moteur un coefficient de rigidité qui joue le rôle d'un embrayage et qui peut prendre une valeur comprise entre 0.0 et 1.0. Lorsque ce coefficient de rigidité est égal à 1, le moteur est en mesure de développer le couple maximum autorisé. Celui-ci peut avantageusement être fixé à une valeur sensiblement inférieure à la valeur indiquée par le fournisseur pour éviter la surchauffe. Par exemple, dans le cas de NAO où les moteurs des articulations développent un couple maximal de l'ordre de 5 à 6 Nm, le couple autorisé à rigidité maximale est de 3,2 Nm. Lorsque ce coefficient est égal à zéro, le moteur est débrayé et l'articulation est en débattement libre. En conséquence, le robot tombe...La procédure de mise en sécurité prévoit que tous les coefficients de rigidité, ou certains d'entre eux seulement, passent de 1 à 0 lorsque la température locale ou totale dépasse une valeur de seuil. Le robot n'est alors plus utilisable.

La figure 3 illustre un organigramme général des traitements de contrôle-commande d'un moteur d'articulation d'un robot selon un mode de réalisation de l'invention.

Selon le principe de l'invention, il s'agit de calculer une valeur des couples à appliquer à chaque articulation pour faire ensuite varier le coefficient de rigidité desdites articulations de manière à assurer un équilibre du robot.

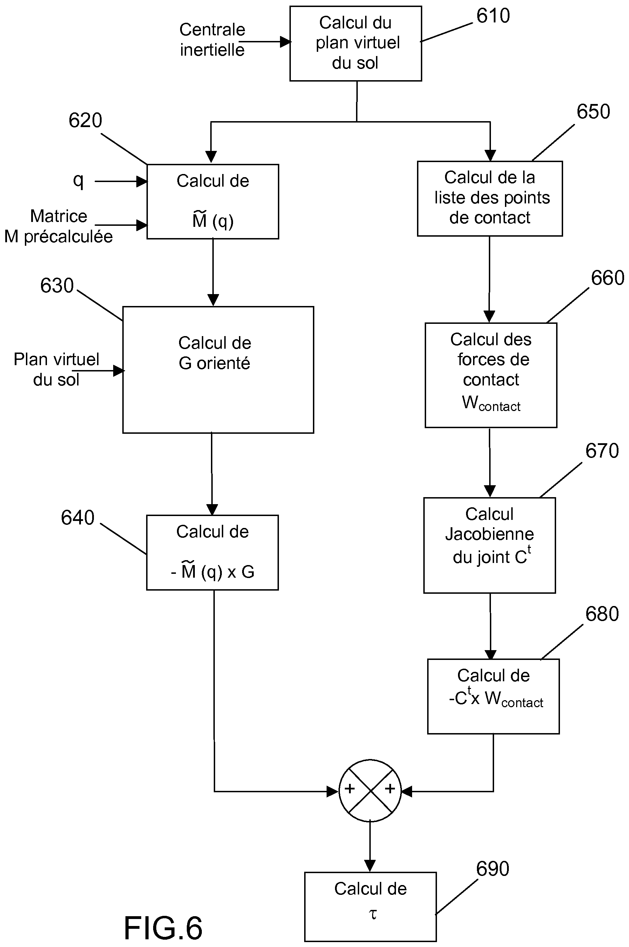

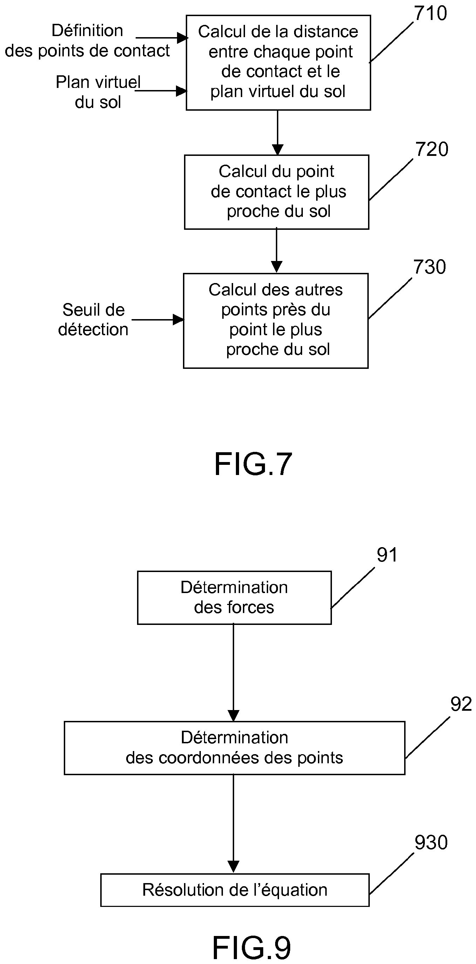

Un module, 310, calcule les couples articulaires à partir d'un modèle descriptif de la dynamique du robot qui sera détaillé plus loin dans la description en relation avec les figures 6 et 7. Il est alimenté d'une part par des données permanentes de configuration du robot, 330 et, d'autre part, par des données instantanées issues d'une centrale inertielle, 340, de capteurs articulaires, 350, et de capteurs de contact ou procédés de mesures de distance au sol, 360. Les valeurs de couple sont ensuite fournies à un module, 320, de calcul des coefficients de rigidité articulaires.

Les données de configurations du robot, 330, sont constituées pour l'essentiel, pour mettre en oeuvre la présente invention, par une matrice M d'inertie de tous les corps du robot dans leur repère propre. Les corps du robot sont ses différents constituants physiques : la tête, le cou, le torse (chaîne centrale), les bras, avant-bras et mains (chaînes latérales supérieures), les cuisses, jambes et pieds (chaînes latérales inférieures). Chacun des corps a une matrice de masse $M$ de dimension (6,6) dans laquelle est renseigné la masse du corps et ses moments d'inertie.

Les moments d'inertie étant des invariants, la matrice M peut être calculée par avance, à l'initialisation du robot en fonction de la configuration du robot. Une des particularités de NAO est en effet d'autoriser un changement des constituants physiques du robot, les données de configuration étant calculées à chaque initialisation.

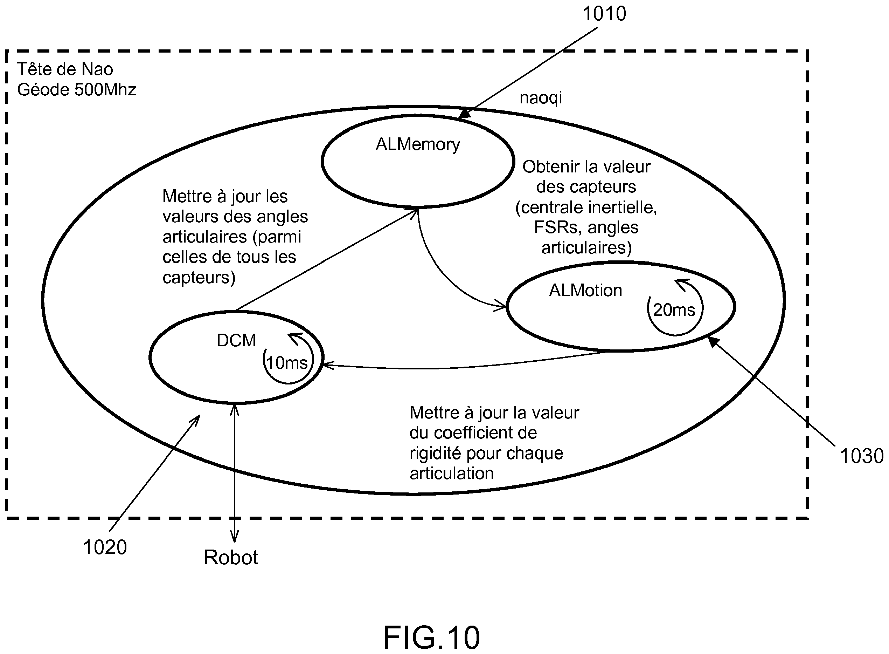

Ainsi, on a un ensemble de matrices M, chaque matrice est stockée dans un module ALMotion (voir plus loin dans la description les commentaires en liaison avec la figure 10). Une matrice M a la forme suivante :

$$M = \begin{bmatrix} M_{racine} & 0_{6,6} & ... & 0_{6,6} \\ 0_{6,6} & M_1 & ... & ... \\ ... & & & 0_{6,6} \\ 0_{6,6} & & 0_{6,6} & M_{ndll} \end{bmatrix} \text{ avec } M_i = \begin{bmatrix} m_i I_3 & 0_{3,3} \\ 0_{3,3} & \mathfrak{I}_i \end{bmatrix}$$

On a posé :

- $m_i$ = masse du corps i ;

- $\mathfrak{I}_i$ = matrice d'inertie du corps i exprimée à son centre de masse et dans le repère propre du corps ;

$$I_3 = \begin{bmatrix} 1 & 0 & 0 \\ 0 & 1 & 0 \\ 0 & 0 & 1 \end{bmatrix}$$

- $I_3$ = matrice identité 3x3

Dans le cas d'un bras de robot ayant une base fixe, le corps racine est généralement fixé au sol. Dans le cas d'un robot à base volante (non fixée au sol), le corps racine n'est pas fixé. Il est libre et il est déterminé par le système.

La centrale inertielle, 340, est généralement constituée d'un gyromètre et d'un accéléromètre. Elle fournit ses mesures au module 310.

Les capteurs articulaires, 350, sont généralement des MRE, comme indiqué ci-dessus. Ils fournissent au module 310 les valeurs d'angles articulaires.

Les capteurs de contact, 360, permettent de déterminer les positions de points caractéristiques, dénommés généralement effecteurs, par rapport à un référentiel donné, le référentiel terrestre ou la surface de déplacement (le sol par exemple). Les FSR implantés sous les soles des pieds sont des capteurs de contact. On peut imaginer implanter des FSR, ou des capteurs de contact d'un autre type, sur d'autres parties des chaînes articulées du robot, par exemple les fesses, les coudes, le dos... Les capteurs physiques de contact sont cependant d'une fiabilité relative. On peut parvenir au même résultat (déterminer s'il y a contact avec la surface du sol), en connaissant toutes les valeurs d'angles articulaires et la position et l'orientation du corps racine dans l'espace. La position et l'orientation du corps racine dans l'espace sont déterminées par les FSR et la centrale inertielle. A partir des valeurs d'angles articulaires et de la position et de l'orientation du corps racine dans l'espace, il est possible de calculer par géométrie directe la position de tous les corps du robot dans l'espace.

Le module 320 est configuré pour calculer les coefficients de rigidité de chacune des articulations. Les couples de chacune des articulations sont fournis en entrée du module 320. Le module effectue la division du couple de chacune des articulations par le couple maximal pour en déduire les valeurs des coefficients de rigidité à appliquer à chacune des articulations. Selon les effets qui sont pris en compte dans le modèle de description dynamique du robot qui détermine les sorties du module 310, on peut prévoir dans le module 320 de rajouter un offset au coefficient de rigidité. Cet offset peut être une constante, un ensemble de valeurs dépendant de types de postures ou contextes d'emploi du robot, lesdites valeurs pouvant être tabulées, ou une variable pour laquelle on définit une loi d'évolution.

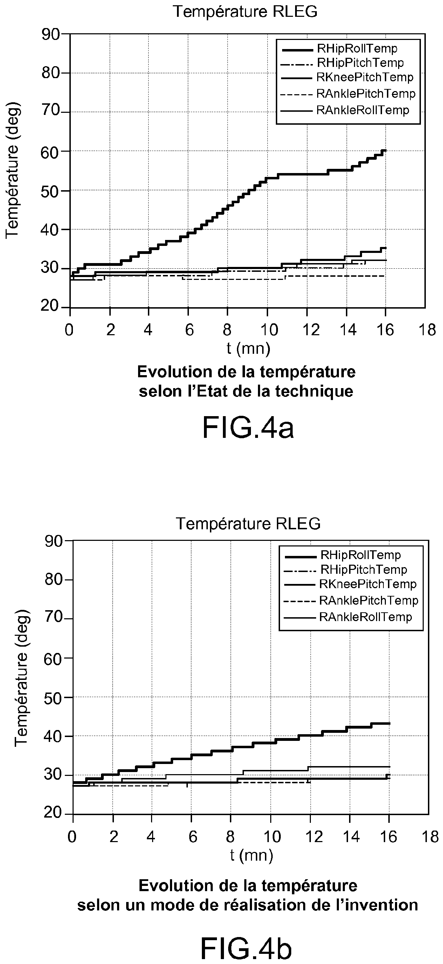

Les figures 4a et 4b représentent l'évolution au cours du temps des températures des articulations de la jambe droite d'un robot, respectivement selon l'art antérieur et selon un mode de réalisation de l'invention.

Les expériences ont été conduites avec des robots physiquement identiques, la seule différence entre les expériences retracées respectivement par la figure 4a et par la figure 4b étant que la configuration du robot ne comprend pas dans le premier cas les moyens de mise en oeuvre de l'invention, alors que, dans le deuxième cas, il les comprend.

Dans les deux cas, le robot a été placé dans une position debout d'initialisation (PoseInit).

Sur chacune des figures 4a et 4b sont représentée l'évolution de la température de chacun des moteurs articulaires de la chaîne articulaire inférieure droite, sans et avec mise en oeuvre de l'invention :

- Les courbes RHipRollTemp représentent les évolutions de la température de l'articulation de roll de la hanche droite ;

- Les courbes RHipPitchTemp représentent les évolutions de la température de l'articulation de pitch de la hanche droite ;
- Les courbes RKneePitchTemp représentent les évolutions de la température de l'articulation de pitch du genou droit ;
- Les courbes RAnkleRollTemp représentent les évolutions de la température de l'articulation de roll de la cheville droite ;
- Les courbes RAnklePitchTemp représentent les évolutions de la température de l'articulation de pitch de la cheville droite.

On note particulièrement la différence très significative des températures en fin d'expérience (15 minutes environ) sur l'articulation de pitch de la hanche droite, qui atteint 60°C dans le premier cas et 42°C dans le deuxième cas. L'augmentation globale de température de la jambe droite est de 50°C dans le premier cas et de 28°C dans le deuxième cas.

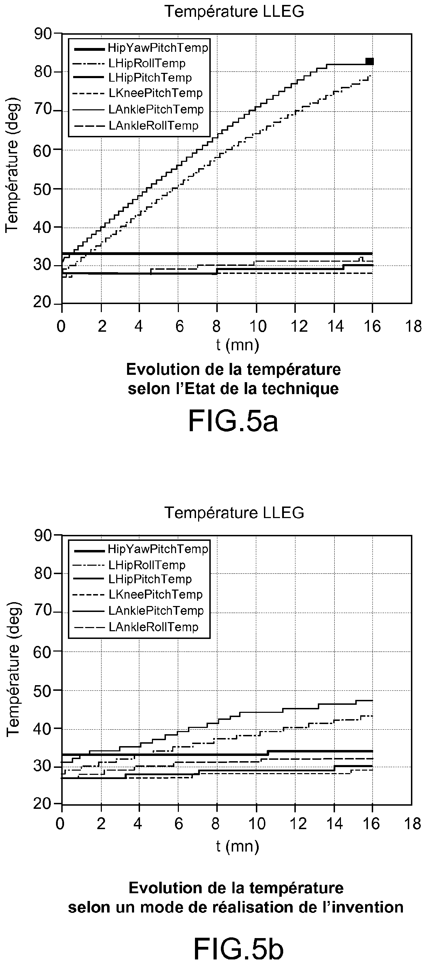

Les figures 5a et 5b représentent l'évolution au cours du temps des températures des articulations de la jambe gauche d'un robot, respectivement selon l'art antérieur et selon un mode de réalisation de l'invention. Les conditions de l'expérience sont identiques à celle retracée par les figures 4a et 4b. Les résultats concernant la jambe gauche sont encore plus avantageux, notamment en ce qui concerne l'articulation de pitch de la cheville, dont la température atteint 80°C dans le premier cas et 48°C dans le deuxième cas, l'augmentation globale de température de la jambe gauche étant de 109°C dans le premier cas et de 42°C dans le deuxième cas. L'atteinte d'une température de 80°C, atteinte dans les conditions de l'expérience en moins d'un quart d'heure, entrainant normalement la mise en sécurité du robot, la durée de fonctionnement du robot est donc très sensiblement allongée par la mise en oeuvre de l'invention (d'un facteur d'environ 4).

La figure 6 est un organigramme de certaines étapes des traitements de contrôle-commande d'un moteur d'articulation d'un robot selon un mode de réalisation de l'invention.

Pour calculer les couples articulaires, on applique l'équation qui décrit l'évolution dynamique du robot, à laquelle on applique le cas échéant certaines hypothèses simplificatrices, en fonction des capteurs et de la capacité de calcul dont on dispose.

En appliquant les principes généraux de la mécanique de corps rigidement liés entre eux en interaction avec leur environnement, un homme du métier de roboticien peut déterminer une équation complète du modèle dynamique d'un robot en se reportant notamment à l'ouvrage classique : « A Mathematical Introduction to Robotics Manipulation », MURRAY, Richard M., LI Zexiang et SASTRY, S . Shankar, CRC Press, 1994 .

On écrira par exemple :

$$\tilde{M}(q)(\dot{T} - G) + N(q, \dot{q})T = L\tau + C^t(q)W$$

Dans la suite de la description, q est le vecteur constitué par les angles articulaires. $\dot{q}$ désigne la vitesse articulaire (dérivé en fonction du temps des angles articulaires q). La vitesse cartésienne du corps racine est noté *Vracine* et est de dimension 6. Les trois premières composantes sont la vitesse de translation du corps racine suivant les 3 axes (x, y, z). Les trois dernières composantes sont les vitesses de rotation suivant les 3 axes (x, y, z). On appelle coordonnées généralisées T le vecteur constitué de *Vracine* et $\dot{q}$.

*C(q)* désigne la matrice de transformation entre l'espace des vitesses articulaires et l'espace des vitesses cartésiennes ; elle est communément appelé Jacobienne cinématique.

Le premier terme du côté gauche de l'équation traduit l'effet des moments d'inertie des corps constituant les chaînes articulées.

Dans ce terme :

- $\tilde{M}$ : la matrice symétrique d'inertie en coordonnées généralisées. Elle se calcule à partir de la matrice M ainsi que de *C(q)*, $\tilde{M} = C(q)^t M C(q)$. Cette matrice dépend de la configuration articulaire du robot (q) ; elle doit être mise à jour chaque fois qu'une ou plusieurs articulations se déplacent. $\tilde{M}$ est une matrice carrée de dimension dim($\tilde{M}$) = (6 + 6 x $n_{ddl}$, 6 + 6 x $n_{ddl}$ )où est $n_{ddl}$ est le nombre de degrés de liberté du robot. Dans le cas de NAO il existe 23 ddl, la dimension de la matrice $\tilde{M}$ sera de (6 +6 x 23)², soit 20.736 valeurs. ;
- G est l'accélération de la pesanteur exprimée en coordonnées généralisées.

Le deuxième terme du membre de gauche de l'équation traduit l'effet des forces de Coriolis et centrifuges que subit le système. $N(q, \dot{q})$ est la matrice associée à ces effets.

Le premier terme du membre de droite de l'équation traduit l'effet des couples articulaires :

- $\tau$ est le vecteur des couples articulaires, de dimension dim($\tau$)=($n_{ddl}$, 1) ; $\tau$ est la somme du couple d'actionnement et du couple de friction articulaire ;

- L est la matrice permettant d'exprimer $\tau$ en coordonnées généralisées.
- *W* est la matrice des torseurs d'efforts appliqués sur chacun des corps constituant le robot exprimés dans leurs repères propres ; on décompose en général *W* en $W_{contact}$ qui est le torseur d'effort lié aux contacts des corps avec l'environnement extérieur et $W_{perturbation}$ qui est le torseur d'effort lié à des perturbations extérieures.

Dans un mode de réalisation, on simplifie le modèle en ne calculant pas à ce stade les accélérations propres (T) et forces de Coriolis et centrifuges ($N(q,\dot{q})$), ainsi que les couples des friction articulaire et des perturbations externes ($W_{perturbation}$). Ces effets et sont pris en compte, comme expliqué plus loin, par un offset.
Le modèle dynamique simplifié s'écrit donc :

$$- \tilde{M}(q)G = L\tau + C^t(q)W_{contact}$$

L'organigramme de la figure 6 décrit les étapes de calcul mises en oeuvre pour résoudre cette équation, sans que ce découpage doive être considéré comme limitatif, d'autres procédures étant tout à fait possibles.
Ces étapes de calcul sont reproduites à un temps de cycle de 20 ms.
Dans une étape 610, on calcule un plan virtuel du sol à partir des mesures de la centrale inertielle. Ledit plan virtuel est déterminé comme étant le plan normal au vecteur gravité. Selon le degré de fiabilité des mesures de la centrale, on peut avantageusement croiser ces mesures avec une détermination de l'orientation du torse par repérage des corps inférieurs en contact ou pas avec le sol.
Dans une étape 620, on met à jour le vecteur q grâce au module ALMemory où sont mis à jour les angles des capteurs articulaires. A l'aide des matrices *M* on peut ainsi calculer $\tilde{M}(q)$.

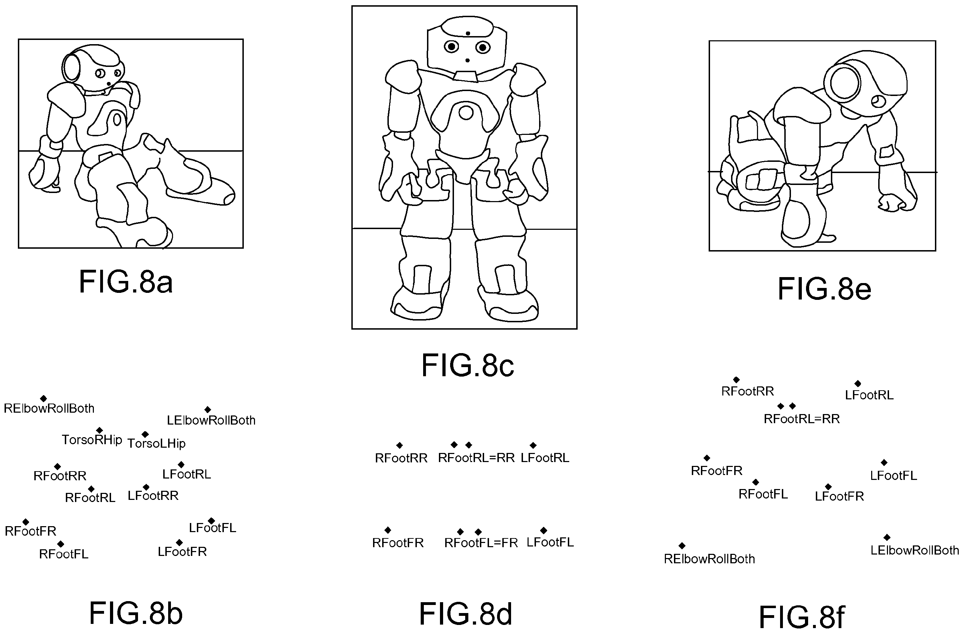

Dans une étape 630, on calcule l'accélération gravitationnelle orientée par rapport au plan virtuel du sol.
Dans une étape 640, on combine les sorties des étape 620 et 630 pour calculer le terme $-\tilde{M}(q)G$.
Dans une étape 650, on calcule la liste des points de contacts pris en compte pour le calcul des forces, ladite étape étant détaillée plus loin dans la description en relation avec la figure 7 et illustrée par les exemples des figures 8a à 8f.
Dans une étape 660, on calcule les forces de contact, $W_{contact}$, ladite étape étant détaillée plus loin dans la description en relation avec la figure 9.
Dans une étape 670, on calcule $C^t(q)$, transposée de la matrice de transformation entre l'espace des vitesses articulaires et l'espace des vitesses cartésiennes.
Dans une étape 680, on effectue le produit de la matrice en sortie de l'étape 670 avec le vecteur en sortie de l'étape 660. En additionnant les sorties des étapes 640 et 680, on obtient en sortie de l'étape 690 le vecteur des couples articulaires que l'on recherchait.
On peut ensuite fournir ce vecteur en entrée au module 320 de calcul des coefficients de rigidité, ledit module ajoutant éventuellement un offset tenant compte notamment des simplifications du modèle dynamique du robot qui auront été faites. En particulier, si l'on ne tient compte ni des accélérations propres, ni des forces de Coriolis, ni des forces de centrifuge ni des couples de friction articulaire, on a pu déterminer expérimentalement qu'un offset de 0,25 donnait de bons résultats pour un robot en posture debout, sans autre interaction avec son environnement. Lorsqu'aucun pied du robot ne repose sur le sol, on peut choisir un offset plus faible, par exemple 0,1, ce qui déliera les articulations du robot et lui donnera une attitude plus souple.

La figure 7 est une première vue de détail d'une étape de l'organigramme de la figure 6.
Elle détaille les sous-étapes de l'étape 650 de détermination des points de contact.
Dans le fichier de configuration du robot, on définit une liste de points caractéristiques candidats à être des points de contact. Dans le cas d'un robot humanoïde tel que NAO, on choisira par exemple, sans que cette liste soit limitative ou qu'il soit nécessaire de retenir tous ces points de contact, les deux pieds, les deux fesses, le dos, la tête et l'ensemble main/avant-bras/coude.
Ces données de configuration déterminent la liste des effecteurs pour lesquels on va calculer au cours d'une étape 710 les distances verticales au plan virtuel du sol déterminé en sortie de l'étape 610.
On détermine alors au cours d'une étape 720 le point de contact le plus proche du sol.
On a défini dans le fichier de configuration du robot un seuil de détection et on détermine au cours d'une étape 730 les autres effecteurs qui se situent dans le voisinage du sol dans la limite du seuil de détection.

Les figures 8a à 8f représentent un robot dans trois postures, avec détermination des points de contact selon un mode de réalisation de l'invention.
Les figures 8a, 8c et 8e représentent trois postures différentes du robot :

- Sur la figure 8a, le robot est dans une des postures assis possibles;
- Sur la figure 8c, le robot est dans une des postures debout possibles ;

- Sur la figure 8e, le robot est dans une posture dite « gorille ».

Les points de contact candidats correspondant à ces postures sont représentés respectivement sur les figures 8b, 8d et 8f.
Les notations des points de contact sont les suivantes :

- RElbowRoll Both, articulation de roll du coude droit ;
- LElbowRollBoth, articulation de roll du coude gauche ;
- RFootFR, pied droit, capteur avant droit ;
- RFootFL, pied droit, capteur avant gauche ;
- RFootRR, pied droit, capteur arrière droit ;
- RFootRL, pied droit, capteur arrière gauche.

La figure 9 est une deuxième vue de détail d'une étape de l'organigramme de la figure 6.
L'objectif de cette étape est de calculer les efforts de contact s'appliquant sur NAO.
Dans cette étape, le robot est modélisé par une masse ponctuelle en interaction avec son environnement par des points de contact. Tous les contacts sont coplanaires. De plus, pour simplifier les calculs, on se place dans le cas statique.
Il s'agit de résoudre les équations suivantes :

- somme des forces s'appliquant sur le robot (ici son centre de masse dans le cas statique) s'annule, soit :

$$\sum_i f_i = m.g$$

- somme des moments s'annule au centre de masse.

A partir de trois points de contact coplanaires, il y a un hyperstatisme des efforts de contact. En effet, il y a une infinité d'e valeurs d'efforts de contact qui sont solutions du problème ci-dessus, notamment en raison du fait que : les efforts tangentiels des forces de contact peuvent se compenser en respectant les deux équations..
Pour trouver une solution préférée, on cherche à minimiser les efforts de contact calculés et on considère que les forces de contact tangentielles sont nulles.
Pour chaque contact, on ne considère que la composante de force normale au plan.

On note $f_c(\vec{i}) = f_c(i)\vec{z}$ le vecteur force du contact i de NAO sur son environnement avec $f_c(i)$ la norme de la force de contact suivant l'axe $\vec{z}$. Soit le système à résoudre :

$$\begin{bmatrix} 1 & 1 & ... & 1 \\ (x_1 - x_G) & (x_2 - x_G) & ... & (x_n - x_G) \\ (y_1 - x_G) & (y_1 - x_G) & ... & (y_n - x_G) \end{bmatrix} \bullet \begin{bmatrix} f_1 \\ f_2 \\ ... \\ f_n \end{bmatrix} = \begin{bmatrix} mg \\ 0 \\ 0 \end{bmatrix}$$

Que l'on peut écrire sous la forme simplifiée :

$$AY = B$$

Expression dans laquelle :

- $B$ est un vecteur somme des composantes verticales des forces extérieures (hors contact) ;
- Y est le vecteur recherché des composantes verticales des forces appliquées aux points de contact sélectionnés en sortie de l'étape 650 ;
- A est une matrice dont les coefficients sont les coordonnées des points de contact par rapport au centre de masse.

Les notations sont les suivantes :

- $(x_i, y_i)$ sont les coordonnées des points de contact sélectionnés ;
- $(x_G, y_G)$ *sont* les coordonnées du centre de masse ;
- $f_i$ est la norme de la force normale appliquée au point de contact i qui est recherchée.

Au cours d'une étape 910, on détermine les forces extérieures (hors contact) que le robot doit équilibrer..

Au cours d'une étape 920, on calcule les coefficients de la matrice A. Pour cela, il convient de projeter le centre de masse du robot dans le plan virtuel du sol déterminé lors de l'étape 610.

Il s'agit ensuite de déterminer au cours d'une étape 930 une solution Y de l'équation $AY = B$.

Si le nombre de contacts n est égal à trois, il s'agit d'inverser la matrice A. Sous condition que son déterminant soit non nul, il existe une solution unique.

Dès que n est supérieur à 3, une infinité de solutions est possible. Il s'agit donc de sélectionner un algorithme de détermination d'une solution optimale sous contrainte que l'équation $AY = B$ soit satisfaite.

On peut par exemple utiliser un algorithme de résolution quadratique consistant à recherche les valeurs de Y (et donc de $f_i$) pour lesquelles la fonction $$\min_y = \frac{1}{2}\|A.Y - B\|_Q + \frac{1}{2}\|Y\|_R$$ est minimisée sous condition que $Y > 0$.

Q et R représentent des poids d'optimisation. Le but de cette opération consiste à minimiser la norme de AY-B avec le poids Q et à minimiser la norme Y avec le poids R.

La figure 10 est un schéma d'une architecture physique et fonctionnelle permettant la mise en oeuvre de l'invention dans plusieurs de ses modes de réalisation.

Un robot tel que NAO est avantageusement doté de logiciels de haut niveau permettant le pilotage des fonctions du robot dans un mode de réalisation de l'invention. Une architecture logicielle de ce type, dénommée NAOQI, a été divulguée notamment dans la demande de brevet WO2009/124955 publiée le 15/10/2009. Elle comporte les fonctions de base de gestion des communications entre un robot et un PC ou un site distant et d'échange de logiciels qui fournissent l'infrastructure logicielle nécessaire à la mise en oeuvre de la présente invention.

NAOQI est un framework optimisé pour les applications robotiques ; il supporte plusieurs langages, notamment C++, Python et Urbi.

Dans le cadre de la présente invention, sont particulièrement utiles les modules de NAOQI suivants :

- le module ALMemory, 1010, gère une mémoire partagée entre les différents modules de NAOQI, et reçoit en particulier les éléments de configuration qui sont chargés à l'initialisation ;
- le module DCM, 1020, gère les communications avec le robot physique (moteurs, capteurs) ;
- le module ALMotion, 1030, gère les mouvements du robot ; le code permettant l'exécution des algorithmes pour mettre en oeuvre l'invention est implanté pour l'essentiel dans ce module.

Ces trois modules sont avantageusement codés en C++. La figure indique également les flots de données entre modules :

- le module ALMotion 1030 récupère auprès du module ALMemory 1010 les données capteurs (centrale inertielle, FSR, angles articulaires...) ;
- il effectue les étapes de calcul des coefficients de rigidité des articulations et en communique les résultats au module DCM 1020 ;
- ce module passe au module ALMemory 1010 les valeurs de contrainte des angles articulaires qui résultent de l'application de ces coefficients.(en même temps que les valeurs des autres capteurs)

Les exemples décrits ci-dessus sont donnés à titre d'illustration de modes de réalisation de l'invention. Ils ne limitent en aucune manière le champ de l'invention qui est défini par les revendications qui suivent.

## Revendications

1. Robot (100) doté de capacités de déplacement sur au moins une chaîne articulée (110) comprenant au moins un capteur (130) de contact de l'extrémité de ladite chaîne avec la surface de déplacement (120), ladite chaîne comprenant au moins une articulation (140), ladite articulation commandée par un moteur électrique (210) contrôlé par une consigne en position et/ou vitesse et par des moyens de limitation du courant et/ou du couple appliqué par ledit moteur à ladite articulation, ledit robot étant **caractérisé en ce qu'**il comprend encore:

   a) une première logique de calcul (310) du couple articulaire comme étant solution d'une équation modélisant l'équilibre dynamique du robot entre, d'une part, la somme de la différence des forces inertielles dues à l'accélération angulaire de l'articulation et de l'accélération de la gravité et de l'effet des forces de Coriolis et centrifuge et, d'autre part, la somme du couple et des forces de contact, de friction et de perturbation, lesdits couple et force étant appliqués à ladite articulation, une partie des effets des forces inertielles dues à l'accélération angulaire de l'articulation, des forces de Coriolis et centrifuge et des forces de friction étant modélisée par un offset,

b) une seconde logique de calcul (320) configurée pour définir ladite limitation du courant et/ou du couple appliqué, à partir du couple articulaire calculé par ladite première logique de calcul pour ladite articulation.

2. Robot selon la revendication 1, **caractérisé en ce que** ledit offset varie selon la posture du robot.

3. Robot selon l'une des revendications 1 à 2, **caractérisé en ce que** l'effet de l'accélération de la gravité est calculé à partir d'une matrice de coefficients d'inertie dépendant de la configuration du robot et appliquée aux angles articulaires et du vecteur gravité déterminé par combinaison de mesures d'une centrale inertielle du robot.

4. Robot selon la revendication 3, **caractérisé en ce que** pour le calcul du vecteur gravité on opère en outre une levée de doute par détermination de l'orientation dans l'espace d'une chaîne centrale du robot par résolution de la position d'effecteurs solidaires de ladite chaîne.

5. Robot selon l'une des revendications 3 à 4, **caractérisé en ce que** les points d'application des forces de contact prises en compte dans le modèle d'équilibre dynamique du robot sont déterminés par génération d'une première liste d'effecteurs satisfaisant un critère choisi dans un groupe de critères comprenant une liste d'états on/off de capteurs de contact positionnés sur lesdits effecteurs, une liste de seuils de distance minimale par rapport au plan virtuel du sol desdits effecteurs et toute combinaison desdits listes, lesdits critères étant substantiellement déterminés par la morphologie du robot.

6. Robot selon la revendication 5, **caractérisé en ce que** les effecteurs de la première liste sont filtrés en une deuxième liste par comparaison de la posture actuelle du robot à des postures types stockées dans les données de configuration du robot, lesdites postures types déterminant une liste type d'effecteurs, ladite deuxième liste comprenant seulement les effecteurs de la liste correspondant à la posture type retenue comme la plus proche de la posture actuelle du robot selon un critère de similarité, si elle existe, et seulement ceux-ci.

7. Robot selon l'une des revendications 3 à 6, **caractérisé en ce que** les forces de contact aux points d'application sont déterminées par recherche d'une solution sensiblement optimale à l'équation d'équilibre entre la somme desdites forces de contact et le poids du robot. et de la composante verticale des forces de perturbation.

8. Robot selon la revendication 7, **caractérisé en ce que** les forces de perturbation sont négligées.

9. Robot selon l'une des revendications 1 à 8, **caractérisé en ce que** ladite seconde logique de calcul est configurée pour calculer un coefficient de rigidité à appliquer à l'articulation à partir dudit couple articulaire calculé par la première logique de calcul pour l'articulation, lesdits coefficients de rigidité réalisant lesdits moyens de limitation du courant et/couple exercé sur ladite articulation.

10. Procédé de limitation du couple et/ou du courant appliqué à un moteur électrique de commande d'une articulation d'un robot doté de capacités de déplacement sur au moins une chaîne articulée comprenant au moins un capteur de contact de l'extrémité de ladite chaîne avec la surface de déplacement, ladite chaîne comprenant au moins une articulation, ledit moteur électrique étant contrôlé par une consigne en position et/ou vitesse, ledit procédé étant **caractérisé par** les étapes suivantes :

a) une première étape de calcul d'un couple articulaire pour ladite articulation, ledit couple étant calculé comme étant solution d'une équation modélisant l'équilibre dynamique du robot entre, d'une part, la somme de la différence des forces inertielles dues à l'accélération angulaire de l'articulation et de l'accélération de la gravité et de l'effet des forces de Coriolis et centrifuge et, d'autre part, la somme du couple et des forces de contact, de friction et de perturbation, lesdits couple et force étant appliqués à ladite articulation, une partie des effets des forces inertielles dues à l'accélération angulaire de l'articulation, des forces de Coriolis et centrifuge et des forces de friction étant modélisée par un offset, et

b) une seconde étape de définition de ladite limitation du courant et/ou du couple appliqué, à partir du couple articulaire calculé à ladite première étape de calcul pour ladite articulation.

**11.** Procédé selon la revendication 10, **caractérisé en ce que** ladite seconde étape de calcul est une étape de calcul d'un coefficient de rigidité à appliquer à l'articulation, ledit coefficient de rigidité permettant une limitation du courant et/ou de couple exercé sur cette articulation, le calcul de ce coefficient étant effectué à partir du couple articulaire calculé à l'étape précédente pour ladite articulation.

**12.** Programme d'ordinateur comprenant des instructions de code de programme permettant l'exécution du procédé selon la revendication 10 lorsque le programme est exécuté sur un ordinateur, ledit programme étant adapté pour permettre une limitation du couple et/ou du courant appliqué à un moteur électrique de commande d'une articulation d'un robot, ledit robot étant doté de capacités de déplacement sur au moins une chaîne articulée comprenant au moins un capteur de contact de l'extrémité de ladite chaîne avec la surface de déplacement, ladite chaîne comprenant au moins une articulation, ledit moteur électrique contrôlé par une consigne en position et/ou vitesse, ledit programme étant **caractérisé en ce qu'**il comprend :

a) un premier ensemble d'instructions de code informatique configurées pour calculer un couple articulaire pour ladite articulation, ledit couple étant calculé comme étant solution d'une équation modélisant l'équilibre dynamique du robot entre, d'une part, la somme de la différence des forces inertielles dues à l'accélération angulaire de l'articulation et de l'accélération de la gravité et de l'effet des forces de Coriolis et centrifuge et, d'autre part, la somme du couple et des forces de contact, de friction et de perturbation, lesdits couple et force étant appliqués à ladite articulation, une partie des effets des forces inertielles dues à l'accélération angulaire de l'articulation, des forces de Coriolis et centrifuge et des forces de friction pouvant être modélisée par un offset, et :
b) un second ensemble d'instructions de code informatique configurées pour définir ladite limitation du courant et/ou du couple appliqué, à partir du couple articulaire calculé par ledit premier ensemble d'instructions de code informatique.

**13.** Programme d'ordinateur selon la revendication 12, **caractérisé en ce que** ledit second ensemble d'instructions de code d'ordinateur est configuré pour calculer un coefficient de rigidité à appliquer à l'articulation, ledit coefficient de rigidité permettant une limitation du courant et/ou de couple exercé sur cette articulation, le calcul de ce coefficient étant effectué à partir du couple articulaire calculé par le premier module de calcul pour ladite articulation.

**Patentansprüche**

**1.** Roboter (100), ausgestattet mit Bewegungsfähigkeiten auf wenigstens einer Gelenkkette (110), umfassend wenigstens einen Sensor (130) für Kontakt des Endes der Kette mit der Bewegungsfläche (120), wobei die Kette wenigstens ein Gelenk (140) umfasst, wobei das Gelenk von einem Elektromotor (210) gesteuert wird, reguliert durch einen Positions- und/oder Geschwindigkeitssollwert und durch Mittel zum Begrenzen des vom Motor auf das Gelenk angewendeten Stroms und/oder Moments, wobei der Roboter **dadurch gekennzeichnet ist, dass** er ferner Folgendes umfasst:

a) eine erste Logik (310) zum Berechnen des Gelenkmoments als Lösung einer Gleichung, die das dynamische Gleichgewicht des Roboters zwischen einerseits der Summe der Differenz der Trägheitskräfte aufgrund der Winkelbeschleunigung des Gelenks und der Beschleunigung der Schwerkraft und der Wirkung von Coriolis- und Zentrifugalkräften und andererseits der Summe des Moments und der Kontakt-, Reibungs- und Störkräfte modelliert, wobei Moment und Kraft auf das Gelenk aufgebracht werden, wobei ein Teil der Wirkungen der Trägheitskräfte aufgrund der Winkelbeschleunigung des Gelenks, der Coriolis- und Zentrifugalkräfte und der Reibungskräfte durch einen Offset modelliert werden,
b) eine zweite Rechenlogik (320), konfiguriert zum Definieren der Begrenzung des angewendeten Stroms und/oder Moments, auf der Basis des Gelenkpaares, berechnet mit der ersten Rechenlogik für das Gelenk.

**2.** Roboter nach Anspruch 1, **dadurch gekennzeichnet, dass** der Offset je nach der Haltung des Roboters variiert.

**3.** Roboter nach einem der Ansprüche 1 bis 2, **dadurch gekennzeichnet, dass** die Wirkung der Beschleunigung der Schwerkraft auf der Basis einer Matrix von Trägheitskoeffizienten in Abhängigkeit von der Konfiguration des Roboters und angewendet auf die Gelenkwinkel und des Schwerkraftvektors berechnet wird, bestimmt durch die Kombination von Messwerten eines Trägheitszentrums des Roboters.

**4.** Roboter nach Anspruch 3, **dadurch gekennzeichnet, dass** zum Berechnen des Schwerkraftvektors ferner ein Zweifelsfall durch Bestimmen der Orientierung einer zentralen Kette des Roboters im Raum durch Auflösen der Position von mit der Kette fest verbundenen Wirkgliedern angewendet wird.

5. Roboter nach einem der Ansprüche 3 bis 4, **dadurch gekennzeichnet, dass** die Kontaktkraftansatzpunkte, die in dem dynamischen Gleichgewichtsmodell des Roboters berücksichtigt werden, durch Erzeugen einer ersten Liste von Wirkgliedern bestimmt werden, die ein Kriterium erfüllen, ausgewählt aus einer Gruppe von Kriterien, die eine Liste von Ein/Aus-Zuständen von an den Wirkgliedern positionierten Kontaktsensoren, eine Liste von Mindestdistanzschwellen mit Bezug auf die virtuelle Ebene des Bodens der Wirkglieder und jede Kombination der Listen umfassen, wobei die Kriterien im Wesentlichen durch die Morphologie des Roboters bestimmt werden.

6. Roboter nach Anspruch 5, **dadurch gekennzeichnet, dass** die Wirkglieder der ersten Liste in einer zweiten Liste durch Vergleichen der aktuellen Haltung des Roboters mit in den Konfigurationsdaten des Roboters gespeicherten Haltungen gefiltert werden, wobei die Haltungen eine Liste von Wirkgliedern bestimmen, wobei die zweite Liste ausschließlich die Wirkglieder der Liste entsprechend der Haltung umfasst, die der aktuellen Haltung des Roboters gemäß einem eventuellen Ähnlichkeitskriterium am nächsten liegt.

7. Roboter nach einem der Ansprüche 3 bis 6, **dadurch gekennzeichnet, dass** die Kontaktkräfte an den Ansatzpunkten durch Suchen einer im Wesentlichen optimalen Lösung für die Gleichgewichtsgleichung zwischen der Summe der Kontaktkräfte und dem Gewicht des Roboters und der vertikalen Störkraftkomponente bestimmt werden.

8. Roboter nach Anspruch 7, **dadurch gekennzeichnet, dass** die Störkräfte vernachlässigt werden.

9. Roboter nach einem der Ansprüche 1 bis 8, **dadurch gekennzeichnet, dass** die zweite Rechenlogik zum Berechnen eines auf das Gelenk anzuwendenden Steifigkeitskoeffizienten auf der Basis des von der ersten Rechenlogik für das Gelenk berechneten Gelenkmoments konfiguriert ist, wobei die Steifigkeitskoeffizienten die Mittel zum Begrenzen des auf das Gelenk angewendeten Stroms und/oder Moments realisieren.

10. Verfahren zum Begrenzen des Moments und/oder des Stroms, angewendet auf einen Elektromotor zum Steuern eines Gelenks eines Roboters, der mit Bewegungsfähigkeiten auf wenigstens einer Gelenkkette ausgestattet ist, umfassend wenigstens einen Sensor für Kontakt des Endes der Kette mit der Bewegungsfläche, wobei die Kette wenigstens ein Gelenk umfasst, wobei der Elektromotor durch einen Positions- und/oder Geschwindigkeitssollwert reguliert wird, wobei das Verfahren **gekennzeichnet ist durch** die folgenden Schritte:

a) einen ersten Schritt des Berechnens eines Gelenkmoments für das Gelenk, wobei das Moment als Lösung einer Gleichung berechnet wird, die das dynamische Gleichgewicht des Roboters zwischen einerseits der Summe der Differenz von Trägheitskräften aufgrund einer Winkelbeschleunigung des Gelenks und der Beschleunigung der Schwerkraft und der Wirkung von Coriolis- und Zentrifugalkräften und andererseits der Summe des Moments und der Kontakt-, Reibungs- und Störkräfte modelliert, wobei Moment und Kraft auf das Gelenk aufgebracht werden, wobei ein Teil der Wirkungen der Trägheitskräfte aufgrund der Winkelbeschleunigung des Gelenks, der Coriolis- und Zentrifugalkräfte und der Reibungskräfte durch einen Offset modelliert wird, und

b) einen zweiten Schritt des Definierens der Begrenzung des aufgebrachten Stroms und/oder Moments auf der Basis des im ersten Schritt des Berechnens für das Gelenk berechneten Gelenkmoments.

11. Verfahren nach Anspruch 10, **dadurch gekennzeichnet, dass** der zweite Rechenschritt ein Schritt des Berechnens eines auf das Gelenk anzuwendenden Steifigkeitskoeffizienten ist, wobei der Steifigkeitskoeffizient eine Begrenzung des auf dieses Gelenk ausgeübten Stroms und/oder Moments zulässt, wobei die Berechnung dieses Koeffizienten auf der Basis des im vorherigen Schritt für das Gelenk berechneten Gelenkmoments erfolgt.

12. Computerprogramm, das Programmcode-Befehle umfasst, die die Ausführung des Verfahrens nach Anspruch 10 zulassen, wenn das Programm auf einem Computer abgearbeitet wird, wobei das Programm ausgelegt ist zum Zulassen einer Begrenzung des Moments und/oder des Stroms, angewendet auf einen Elektromotor zum Steuern eines Gelenks eines Roboters, wobei der Roboter mit Bewegungsfähigkeiten auf wenigstens einer Gelenkkette ausgestattet ist, die wenigstens einen Sensor für Kontakt des Endes der Kette mit der Bewegungsfläche umfasst, wobei die Kette wenigstens ein Gelenk umfasst, wobei der Elektromotor durch einen Positions- und/oder Geschwindigkeitssollwert reguliert wird, wobei das Programm **dadurch gekennzeichnet ist, dass** es Folgendes umfasst:

a) einen ersten Satz von digitalen Code-Befehlen, konfiguriert zum Berechnen eines Gelenkmoments für das Gelenk, wobei das Moment als eine Lösung einer Gleichung berechnet wird, die das dynamische Gleichgewicht des Roboters zwischen einerseits der Summe der Differenz der Trägheitskräfte aufgrund der Winkelbeschleunigung des Gelenks und der Beschleunigung der Schwerkraft und der Wirkung der Coriolis- und Zentrifugalkräfte und andererseits der Summe des Moments und der Kontakt-, Reibungs- und Störkräfte modelliert, wobei Moment und Kraft auf das Gelenk angewendet werden, wobei ein Teil der Wirkungen der Trägheitskräfte aufgrund der Winkelbeschleunigung des Gelenks, der Coriolis- und Zentrifugalkräfte und der Reibungskräfte durch einen Offset modelliert werden kann, und:

b) einen zweiten Satz von digitalen Code-Befehlen, konfiguriert zum Definieren der Begrenzung des angewendeten Stroms und/oder Moments auf der Basis des von dem ersten Satz von digitalen Code-Befehlen berechneten Gelenkmoments.

13. Computerprogramm nach Anspruch 12, **dadurch gekennzeichnet, dass** der zweite Satz von Computer-Code-Befehlen zum Berechnen eines auf das Gelenk anzuwendenden Steifigkeitskoeffizienten konfiguriert ist, wobei der Steifigkeitskoeffizient eine Begrenzung des auf dieses Gelenk angewendeten Stroms und/oder Moments zulässt, wobei die Berechnung dieses Koeffizienten auf der Basis des vom ersten Berechnungsmodul für das Gelenk berechneten Gelenkmoments erfolgt.

## Claims

1. A robot (100) with capabilities of displacement on at least one jointed chain (110) comprising at least one sensor (130) of contact of the end of said chain with the displacement surface (120), said chain comprising at least one joint (140), said joint driven by an electric motor (210) controlled by an order determined based on position and/or velocity and by means for limiting the current and/or the torque applied by said motor to said joint, said robot being **characterized in that** it also comprises:

   a) a first logic (310) for calculating the articular torque as a solution of an equation modeling the dynamic equilibrium of the robot between, on the one hand, the sum of the difference of the inertial forces due to the angular acceleration of the joint and of the gravitational acceleration and of the effect of the Coriolis and centrifugal forces and, on the other hand, the sum of the torque and of the contact, friction and perturbation forces, said torque and force being applied to said joint, a part of the effects of the inertial forces due to the angular acceleration of the joint, of the Coriolis and centrifugal forces and of the friction forces being modeled by an offset,

   b) a second calculation logic (320) configured to define said limitation of the current and/or of the torque applied on the basis of the articular torque calculated by said first calculation logic for said joint.

2. The robot according to Claim 1, **characterized in that** said offset varies according to the posture of the robot.

3. The robot according to any of Claims 1 to 2, **characterized in that** the effect of the gravitational acceleration is calculated on the basis of a matrix of inertia coefficients dependent on the configuration of the robot and applied to the articular angles and of the gravity vector determined by combining measurements of an inertial platform of the robot.

4. The robot according to Claim 3, **characterized in that** for the calculation of the gravity vector, a disambiguation is carried out by determining the orientation in space of a central chain of the robot by solving the position of effectors affixed to said chain.

5. The robot according to either of Claims 3 to 4, **characterized in that** the points of application of the contact forces taken into account in the dynamic equilibrium model of the robot are determined by generating a first list of effectors satisfying a criterion chosen from a group of criteria comprising a list of on/off states of contact sensors positioned on said effectors, a list of thresholds of minimum distance with respect to the virtual ground plane of said effectors and any combination of said lists, said criteria being substantially determined by the morphology of the robot.

6. The robot according to Claim 5, **characterized in that** the effectors of the first list are filtered into a second list by comparing the current posture of the robot with standard postures stored in the robot configuration data, said standard postures determining a standard list of effectors, said second list comprising only the effectors of the list corresponding to the standard posture adopted as the closest to the current posture of the robot according to a similarity criterion, if it exists, and only these.

7. The robot according to any of Claims 3 to 6, **characterized in that** the contact forces at the application points are determined by searching for a substantially optimal solution to the equilibrium equation between the sum of said contact forces and the weight of the robot, and of the vertical component of the perturbation forces.

8. The robot according to Claim 7, **characterized in that** the perturbation forces are neglected.

9. The robot according to any of Claims 1 to 8, **characterized in that** said second calculation logic is configured to calculate a rigidity coefficient to be applied to the joint on the basis of said articular torque calculated by the first calculation logic for the joint, said rigidity coefficients realizing said means for limiting the current and torque applied to said joint.

10. A method for limiting the torque and/or the current applied to an electric motor for driving a joint of a robot with capabilities of displacement on at least one jointed chain comprising at least one sensor of contact of the end of said chain with the displacement surface, said chain comprising at least one joint, said electric motor being controlled by an order based on position and/or velocity, said method being **characterized by** the following steps:

   a) a first step of calculating an articular torque for said joint, said torque being calculated as a solution of an equation modeling the dynamic equilibrium of the robot between, on the one hand, the sum of the difference of the inertial forces due to the angular acceleration of the joint and of the gravitational acceleration and of the effect of the Coriolis and centrifugal forces and, on the other hand, the sum of the torque and of the contact, friction and perturbation forces, said torque and force being applied to said joint, a part of the effects of the inertial forces due to the angular acceleration of the joint, of the Coriolis and centrifugal forces and of the friction forces being modeled by an offset, and
   b) a second step of defining said limitation of the current and/or of the torque applied on the basis of the articular torque calculated in said first step of calculating said joint.

11. The method according to Claim 10, **characterized in that** said second calculation step is a step of calculating a rigidity coefficient to be applied to the joint, said rigidity coefficient allowing a limitation of the current and/or of the torque applied to this joint, the calculation of this coefficient being made on the basis of the articular torque calculated in the preceding step for said joint.

12. A computer program comprising program code instructions allowing the execution of the method according to Claim 10 when the program is executed on a computer, said program being adapted to allow a limitation of the torque and/or the current applied to an electric motor for driving a joint of a robot, said robot being capable of moving on at least one jointed chain comprising at least one sensor of contact of the end of said chain with the displacement surface, said chain comprising at least one joint, said electric motor controlled by an order determined based on position and/or velocity, said program being **characterized in that** it comprises:

   a) a first set of computer code instructions configured to calculate an articular torque for said joint, said torque being calculated as a solution of an equation modeling the dynamic equilibrium of the robot between, on the one hand, the sum of the difference of the inertial forces due to the angular acceleration of the joint and of the gravitational acceleration and of the effect of the Coriolis and centrifugal forces and, on the other hand, the sum of the torque and of the contact, friction and perturbation forces, said torque and force being applied to said joint, a part of the effects of the inertial forces due to the angular acceleration of the joint, of the Coriolis and centrifugal forces and of the friction forces being able to be modeled by an offset, and:
   b) a second set of computer code instructions configured to define said limitation of the current and/or of the torque applied, on the basis of the articular torque calculated by said first set of computer code instructions.

13. The computer program according to Claim 12, **characterized in that** said second set of computer code instructions is configured to calculate a rigidity coefficient to be applied to the joint, said rigidity coefficient allowing a limitation of the current and/or of the torque applied to this joint, this coefficient being calculated on the basis of the articular torque calculated by the first calculation module for said joint.

FIG.1

240

Processeur
central

q    $\dot{q}$    $\tau$

Carte
contrôle

230

220

210

Moteur

## FIG.2

330

Modèle
du robot

340

310

Centrale
inertielle

350

Capteurs
articulaire

360

Calcul des
couples
articulaires

320

Calcul des
rigidités
articulaires

Capteurs de contact /
mesures de distance
au sol

## FIG.3

Température RLEG

**Evolution de la température
selon l'Etat de la technique**

## FIG.4a

Température RLEG

**Evolution de la température
selon un mode de réalisation de l'invention**

## FIG.4b

Température LLEG

| | |
|---|---|
| ━━ | HipYawPitchTemp |
| ━·─·─ | LHipRollTemp |
| ━━ | LHipPitchTemp |
| ─ ─ ─ | LKneePitchTemp |
| ── | LAnklePitchTemp |
| ─ ─ | LAnkleRollTemp |

Evolution de la température
selon l'Etat de la technique

# FIG.5a

Température LLEG

| | |
|---|---|
| ━━ | HipYawPitchTemp |
| ━·─·─ | LHipRollTemp |
| ━━ | LHipPitchTemp |
| ─ ─ ─ | LKneePitchTemp |
| ── | LAnklePitchTemp |
| ─ ─ | LAnkleRollTemp |

Evolution de la température
selon un mode de réalisation de l'invention

# FIG.5b

FIG.6

Définition
des points de contact → Calcul de la distance
entre chaque point
de contact et le
plan virtuel du sol — 710

Plan virtuel
du sol →

↓

Calcul du point
de contact le plus
proche du sol — 720

↓

Seuil de
détection → Calcul des autres
points près du
point le plus
proche du sol — 730

# FIG.7

Détermination
des forces — 91

↓

Détermination
des coordonnées des points — 92

↓

Résolution de l'équation — 930

# FIG.9

FIG.8a

FIG.8c

FIG.8e

FIG.8b

FIG.8d

FIG.8f

FIG.10

EP 2 740 012 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008258670 A
- EP 2347868 A1
- WO 2009124955 A

**Littérature non-brevet citée dans la description**

- **MURRAY, RICHARD M. ; LI ZEXIANG ; SASTRY, S . SHANKAR.** A Mathematical Introduction to Robotics Manipulation. CRC Press, 1994